# FASCICULE DE BREVET EUROPEEN

(11) **EP 0 589 731 B1**
(45) Date de publication et mention de la délivrance du brevet: **18.09.1996**
(21) Numéro de dépôt: 93401905.0
(22) Date de dépôt: 22.07.1993
(51) Int. Cl.: B60N 2/08, B60N 2/02, G05G 9/08, E05F 15/06

(54) **Actionneur pour une glissière, notamment pour un siège de véhicule**
Schienenstellantrieb, insbesondere für einen Fahrzeugsitz
Actuator for a rail, especially for a vehicle seat

(30) Priorité: 21.09.1992 FR 9211219
(43) Date de publication de la demande: 30.03.1994
(73) Titulaire: ECIA - EQUIPEMENTS ET COMPOSANTS POUR L'INDUSTRIE AUTOMOBILE, F-25400 Audincourt (FR)
(72) Inventeur: Escaravage, Gérard, F-25700 Valentigney (FR)
(74) Mandataire: Polus, Camille

(56) Documents cités:
- EP-A- 0 098 703
- DE-A- 3 418 129
- GB-A- 2 081 082
- GB-A- 2 151 697
- US-A- 2 283 761
- US-A- 2 974 998

## Description

La présenté invention concerne la mise en oeuvre d'une glissière de guidage en translation et a plus particulièrement pour objets un actionneur pour la manoeuvre et le déplacement d'une glissière de translation et, aussi, l'application d'un tel actionneur à une glissière pour siège de véhicule notamment automobile terrestre.

Dans de nombreux secteurs d'activité industrielle on utilise des glissières de translation qui sont faites essentiellement d'un élément fixe et d'un élément mobile entre lesquels sont, par exemple, intercalés des corps roulants, et qui servent à faciliter et à guider le coulissement de deux parties ou pièces dont la position relative doit pouvoir être modifiée parallèlement à l'axe longitudinal des glissières.

Une telle situation se rencontre par exemple pour les sièges de véhicules notamment des automobiles terrestres.

Comme on le sait, il est classique de disposer des sièges de véhicule automobile terrestre sur le plancher de celui-ci avec interposition de glissières qui autorisent un coulissement du siège selon une direction parallèle à un plan longitudinal du véhicule, afin de permettre d'adapter la position du siège à la morphologie et aux besoins de son occupant.

Pratiquement les glissières pour ce type d'application sont faites, notamment, d'un élément fixe solidaire du plancher du véhicule et d'un élément mobile solidaire du siège et coopérant avec l'élément fixe, avec si nécessaire interposition de corps roulants entre ces éléments. Une telle glissière est équipée d'un verrou à gache et pène, et à commande pour, normalement, immobiliser relativement l'un à l'autre les éléments fixe et mobile de la glissiere dans une position dans laquelle ils ont été placés, et à permettre de les libérer à volonté pour autoriser le réglage de la position relative de ces éléments. Il est classique que ce verrou soit manoeuvré par l'entremise d'une commande qui comprend un levier qui est monté sur l'élément fixe à l'aide d'une articulation et qui est sollicité élastiquement dans une position qui met en prise mutuelle la gache et le pène du verrou pour immobiliser relativement l'un à l'autre les éléments fixe et mobile de la glissière. Habituellement la gache est constituée de crans ou similaires ménagés dans les éléments fixe et mobile et le pène est constitué de cliquets, dents ou similaires portés par l'une des extrémités du levier dont l'autre extrémité est munie d'une poignée de préhension pour sa manoeuvre.

Pour régler la position longitudinale d'un siège équipé d'une telle glissière avec un verrou, l'occupant saisit d'abord la poignée du levier pour dégager le pène de la gache afin de libérer ou neutraliser le verrou à l'encontre de la sollicitation élastique à laquelle il est soumis, puis l'occupant pousse ou tire sur ses jambes dont les pieds reposent sur le plancher pour reculer ou pour avancer le siège dans la position recherchée, avant de relacher finalement la poignée pour que le verrou immobilise de nouveau le siège dans la nouvelle position où il a été placé.

GB-A-2 151 697 décrit un actionneur du type pour la manoeuvre et le déplacement d'un ensemble qui est fait notamment d'un élément fixe et d'un élément mobile coopérant et qui est équipé d'un verrou comportant un péne et d'une commande pour normalement immobiliser relativement l'un à l'autre ces éléments fixe et mobile dans une position dans laquelle ils ont été placés et les libérer à volonté, ledit actionneur comprenant un vérin avec un corps qui est solidaire de l'élément fixe ou mobile et avec une tige qui présente un bout libre, et une timonerie avec, d'une part, des moyens qui sont solidaires de l'élément fixe et qui sont associés à la commande du verrou et avec, d'autre part, un dispositif qui coopère avec ces moyens et qui est porté par l'élément mobile et qui est mû par la tige dudit vérin.

L'actionneur décrit dans ce document est destiné à la manoeuvre d'une porte automatique.

DE-A-3 418 129 décrit un actionneur pour porte coulissante, notamment pour véhicule automobile.

EP-A-0 098 703 décrit un actionneur pour un mécanisme d'élévation d'un siège de véhicule.

Le but de l'invention est d'automatiser la mise en oeuvre d'une glissière équipée d'un verrou de ce type à l'aide d'un actionneur à vérin qui assure à lui seul d'abord la manoeuvre de la commande du verrou et ensuite le déplacement de la glissière, et inversement.

L'invention a pour objet un actionneur du type précité, caractérisé en ce que l'ensemble est une glissière de translation, et en ce que le verrou comporte de plus une gâche complémentaire du pène, la commande étant intégrée à ce verrou, le corps du vérin étant solidaire de l'élément mobile, le dispositif étant mû par le bout libre de la tige, et la timonerie étant agencée de manière que lors de la mise en oeuvre du vérin le dispositif agisse sur les moyens pour d'abord manoeuvrer la commande du verrou afin de libérer les éléments et ensuite déplacer l'élément mobile par rapport à l'élément fixe, et inversement.

L'invention a aussi pour objet l'application d'un tel actionneur notamment à une glissière de siège de véhicule par exemple automobile terrestre.

D'autres caractéristiques de l'invention apparaîtront à la lecture de la description et des revendications qui suivent ainsi qu'à l'examen du dessin annexé, donné seulement à titre d'exemple, où :
- la Fig. 1 est une vue perspective d'un mode de réalisation d'un actionneur selon l'invention,
- la Fig. 2 est une vue analogue de l'actionneur de la Fig.1 observé du côté opposé, et
- les Fig. 3A et 3B sont des vues de détails, partielles schématiques illustrant cet actionneur dans deux positions différentes de son fonctionnement.

Les actionneurs destinés à la manoeuvre et au déplacement d'une glissière ainsi que les glissières utilisées pour le montage des sièges de véhicule automobile terrestre étant bien connus dans la technique, on ne décrira dans ce qui suit que ce qui concerne directement ou indirectement l'invention. Pour le surplus l'homme du métier de la technique considérée puisera dans les solutions classiques courantes à sa disposition pour faire face aux problèmes particuliers auxquels il est confronté.

Dans ce qui suit on décrira l'actionneur selon l'invention dans son application particulière à une glissière pour siège de véhicule notamment automobile terrestre, mais il est clair que l'invention n'est pas limitée à une telle application.

Dans ce qui suit on utilise toujours un même numéro de référence pour identifier un élément homologue quel que soit le mode de réalisation ou sa variante d'exécution.

Pour la commodité de l'exposé on décrira successivement chacun des constituants d'un actionneur selon l'invention avant d'en expliquer la fabrication au besoin, et le fonctionnement.

L'invention est décrite à propos d'un montage de siège classique, par exemple du type de celui exposé dans le document FR-A- 2 637 241.

L'actionneur selon l'invention est destiné à la manoeuvre et au déplacement d'une glissière 10 de translation équipée d'un verrou 20.

La glissière 10 est faite notamment d'un élément 11 fixe et d'un élément 12 mobile coopérant entre lesquels sont par exemple interposés des corps roulants tels que des billes, aiguilles ou galets non illustrés.

Le verrou 20 comprend, essentiellement, une gache 21, un pène 22 et une commande 23. La gache 21 est constituée, par exemple, de crans ou similaires ménagés respectivement dans l'élément fixe 11 et l'élément mobile 12. Le pène 22 est constitué par exemple de dents, cliquets ou similaires destinés à pénétrer par exemple simultanément dans les crans des éléments pour immobiliser relativement l'un à l'autre les éléments fixe 11 et mobile 12. La commande 23 comprend, par exemple, un levier 231 monté sur l'élément fixe 11 à l'aide d'une articulation 232. L'une des extrémités du levier 231 porte le pène 22. Une sollicitation élastique tel un ressort de rappel 223, maintient normalement le pène 22 engagé dans la gache 21 pour immobiliser l'un sur l'autre l'élément mobile et l'élément fixe.

L'actionneur 30 comprend notamment un vérin 31 et une timonerie 32.

Le vérin 31 comprend un corps 311 qui est rendu solidaire de l'élément mobile 12 à l'aide d'un support 3110 de tout type connu approprié. Le vérin 31 comprend aussi une tige 312 qui est montée coulissante dans le corps 311 et qui présente un bout 3120 libre. Ce vérin 31 de tout type connu, pneumatique ou hydraulique est, de préférence, à double effet pour les raisons qui apparaîtront par la suite.

La timonerie 32 comprend d'une part des moyens 3201 qui sont solidaires de l'élément fixe 11 et qui sont associés à la commande 23 du verrou, et d'autre part un dispositif 3202 qui coopére avec les moyens 3201 et qui est porté par l'élément mobile 12. Ce dispositif 3202 est mû par le bout libre 3120 de la tige 312 du vérin 31.

Comme on le comprendra par la suite, cette timonerie 32 est agencée de manière que lors de la mise en oeuvre du vérin 31, le dispositif 3202 agit sur les moyens 3201 pour d'abord manoeuvrer la commande 23 du verrou afin de libérer les éléments 11, 12 de la glissière et ensuite déplacer l'élément mobile 12 par rapport à l'élément fixe 11, et inversement.

Comme on le voit plus en détail en examinant les figures du dessin, le dispositif 3202 comprend un embout 3221 qui est fixé au bout 3120 libre de la tige 312 du vérin 31 à l'aide, par exemple, d'un écrou vissé sur un filetage ménagé sur le bout libre en question. Cet embout 3221 se présente par exemple à la manière d'une équerre dont l'une des ailes est fixée au bout libre de la tige et dont l'autre des ailes porte un doigt 3222 destiné à coopérer avec les moyens 3201. Comme on le voit, ce doigt 3222 se présente par exemple à la manière d'un pion, cheville ou similaire qui est orthogonal à la tige 312.

Les moyens 3201 comprennent une embase 3210 comme illustré qui est fixée à l'élément fixe 11 et qui porte un bec 3211. Cette embase 3210 est transpercée, à l'aplomb du bec 3211, d'une lumière 3212 oblongue, parallèle à la tige 312 du vérin 31. Comme on le voit cette lumière 3212 est destinée à recevoir le doigt 3222. Un axe 3213 est fixé, comme illustré, sur l'embase 3210. Deux loquets 3214, 3215, pratiquement identiques, en forme de U ou de parenthèse, sont munis, chacun, d'un pont reliant deux branches opposées. L'une des branches de chacun des loquets 3214, 3215 est articulée sur l'axe 3213 et chacune des autres de ces branches est destinée à venir au contact du doigt 3222 et du bec 3211 par son extrémité. La jonction du pont et de la branche articulée sur l'axe de chacun des loquets, forme un talon ou similaire destiné à actionner la commande du verrou par exemple en prenant appui sur le levier 231, comme on le verra par la suite. Un ressort 3216 sollicite les loquets 3214 et 3215 pour tendre à appliquer l'extrémité de leur branche respective contre le doigt 3222 et le bec 3211. Comme illustré ce ressort est, par exemple, un ressort à boudin dont chacune des extrémités libres recourbées en crochet, est ancrée sur l'un des loquets à l'aide par exemple d'une saignée ménagée dans le pont.

Les constituants de l'actionneur sont, par exemple, faits de pièces métalliques obtenues par des techniques traditionnelles de fabrication par exemple découpage, estampage, pliage de tôles de nuances appropriées. La fixation est par exemple faite par soudage, vissage, rivetage, collage.

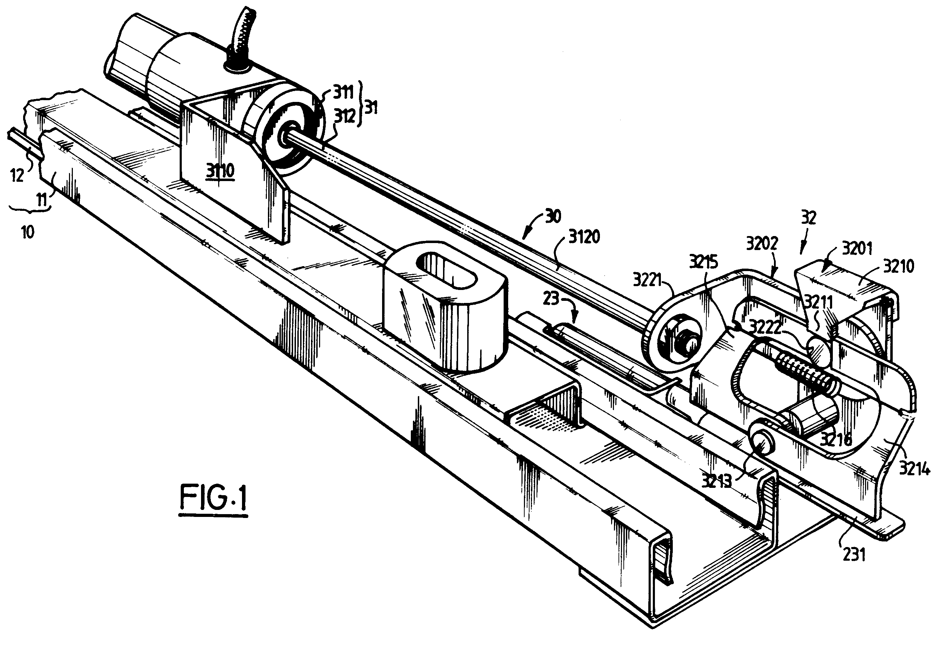

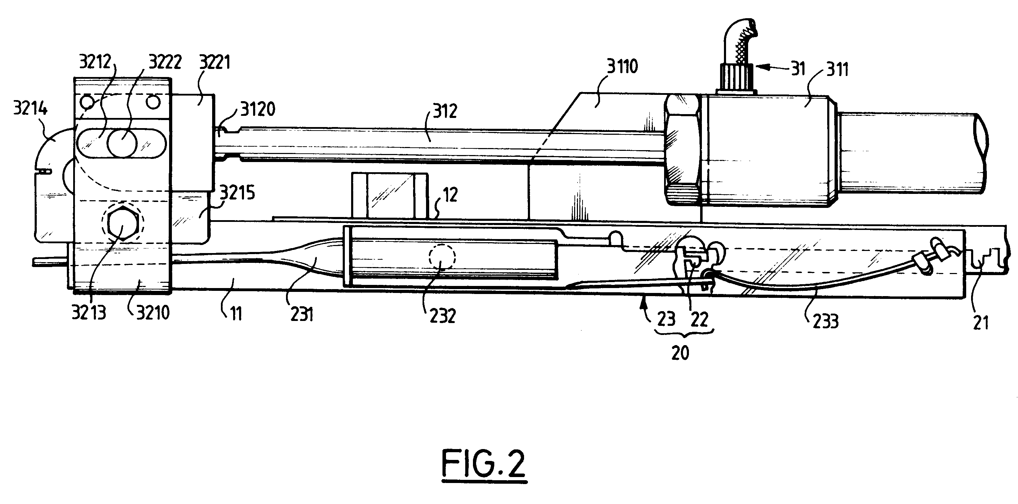

Les constituants de l'actionneur, du verrou et de la glissière sont réunis, assemblés et montés comme cela apparaît clairement notamment à l'examen des Fig. 1 et 2.

On décrira maintenant le fonctionnement de l'actionneur selon l'invention. On rappelera que le vérin est alimenté en fluide sous pression, gazeux ou liquide, de toute manière appropriée classique et que la distribution du fluide est assurée à l'aide de vannes par exemple des électrovannes appropriées convenablement mises en oeuvre par exemple par télécommande, comme il est classique. Cette télécommande est par exemple obtenue à l'aide de commutateurs ou interrupteurs électriques disposés sur la planche de bord ou les accoudoirs dans le cas de l'application particulière aux glissières de siège pour véhicule automobile terrestre.

En position initiale, les éléments fixe et mobile de la glissière occupent une position relative déterminée choisie et le verrou est enclenché pour immobiliser la glissière dans cette position ; ceci est illustré sur les Figures 1 et 2.

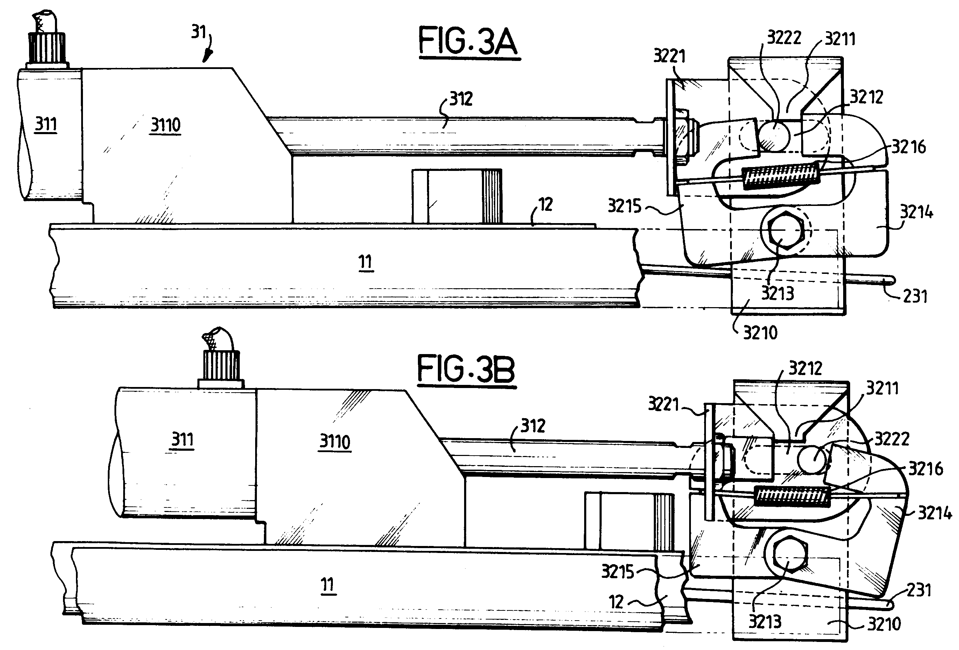

On alimente le vérin 31. Sa tige 312 tend à se déplacer par exemple dans le sens qui la fait sortir du corps 311 (Figure 3B). En se déplaçant la tige 312 entraîne l'embout 3221 et le pion 3222 qu'il porte. Le pion 3222 coulisse dans la lumière 3212,se sépare du bec 3211 qui retient l'une des branches d'un loquet 3214, 3215, repousse celle des branches de l'autre loquet à son contact à l'encontre de la sollicitation du ressort 3216 qui se bande et fait basculer le loquet qu'il entraîne et dont le talon sollicite le levier 231 à l'encontre de sa sollicitation élastique de rappel : le verrou 20 est neutralisé et les éléments fixe 11 et mobile 12 de la glissière sont désolidarisés et rendus libres de coulisser l'un par rapport à l'autre ; ceci est illustré sur les Fig. 3A et 3B.

Ensuite, lorsque le doigt 3222 parvient au fond de la lumière 3212, le vérin dont le corps 311 est lié dès l'origine à l'élément mobile 12 de la glissière et dont la tige 312 est liée maintenant à l'élément fixe 11 de la glissière, déplace ces deux éléments relativement l'un à l'autre, le verrou ayant été neutralisé comme précédemment indiqué.

On observera que l'autre loquet reste toujours au contact du bec 3211.

Lorsque la position recherchée est atteinte on interrompt l'alimentation du vérin. De préférence les chambres du vérin sont mises hors pression par retour du fluide à un réservoir. De préférence, on choisit le tarage du ressort 3216 pour qu'il puisse vaincre les forces de frottement interne du vérin 31 éventuellement avec la contribution de l'élément élastique 233; le doigt 3222 est alors rappelé au milieu de la lumière 3212 et le levier 231 est libéré. La sollicitation élastique 233 de la commande actionne le verrou pour l'enclencher de nouveau afin d' immobiliser les deux éléments de la glissière dans la nouvelle position où ils ont été placés.

Si l'on alimente maintenant le vérin pour que la tige 312 de ce dernier se déplace dans le sens opposé, c'est à dire rentre dans le corps 311 (Figure 3A), c'est l'autre des loquets qui bascule et celui qui avait précédemment été basculé qui reste en appui contre le bec. Les opérations se répètent comme indiqué auparavant, à ce changement près.

De ce qui précède on voit donc que l'actionneur selon l'invention provoque à lui seul d'abord dans un premier temps la manoeuvre de la commande du verrou et, ensuite, dans un second temps le déplacement de la glissière. On comprend que lors de son déplacement le vérin a une course initiale préalable de déverrouillage du verrou qui est antérieure à celle de production de la translation proprement dite. Il y a en quelque sorte un "jeu" de déverrouillage.

On a pu observer que la mise à l'équilibre des chambres du vérin permet le rappel automatique des moyens de l'actionneur à la position initiale où se fait de nouveau le verrouillage.

Il est clair que les rôles du corps et de la tige du vérin peuvent être permutés de même que ceux des éléments fixe et mobile de la glissière.

Selon une variante d'exécution, le pène du verrou au lieu d'être porté par le levier de la commande peut être porté directement par chacun des loquets.

Il est clair qu'en apportant les transpositions convenables à l'invention, cet actionneur peut aussi être utilisé pour le réglage de l'inclinaison d'un dossier relativement à l'assise d'un siège.

Ce qui précède permet de saisir tout l'intérêt de l'invention et de noter tous les avantages qu'elle apporte en particulier pour la commande d'une glissière de siège de véhicule notamment automobile terrestre.

## Revendications

1. Actionneur du type pour la manoeuvre et le déplacement d'un ensemble (10) qui est fait notamment d'un élément fixe (11) et d'un élément mobile (12) coopérant et qui est équipé d'un verrou (20) comportant un pène (22) et d'une commande (23) pour normalement immobiliser relativement l'un à l'autre ces éléments fixe (11) et mobile (12) dans une position dans laquelle ils ont été placés et les libérer à volonté, ledit actionneur comprenant un vérin (31) avec un corps (311) qui est solidaire de l'élément fixe ou mobile et avec une tige (312) qui présente un bout libre (3120), et une timonerie (32) avec, d'une part, des moyens (3201) qui sont solidaires de l'élément fixe (11) et qui sont associés à la commande (23) du verrou et avec, d'autre part, un dispositif (3202) qui coopère avec ces moyens (3201) et qui est porté par l'élément mobile (12) et qui est mû par la tige (312) dudit vérin, caractérisé en ce que l'ensemble (10) est une glissière de translation, et en ce que le verrou (20) comporte de plus une gâche (21) complémentaire du pène (22), la commande (23) étant intégrée à ce verrou, le corps (311) du vérin étant solidaire de l'élément mobile (12), le dispositif (3202) étant mû par le bout libre (3120) de la tige (312), et la timonerie (32) étant agencée de manière que lors de la mise en oeuvre du vérin (31) le dispositif (3202) agisse sur les moyens (3201) pour d'abord manoeuvrer la commandé (23) du verrou afin de libérer les éléments (11, 12) et ensuite déplacer l'élément mobile (12) par rapport à l'élément fixe (11), et inversement.

2. Actionneur selon la revendication 1 caractérisé en ce que le dispositif (3202) comprend un embout (3221) qui est fixé au bout (3120) libre de la tige (312) du vérin (31) et qui porte un doigt (3222) destiné à coopérer avec les moyens (3201).

3. Actionneur selon la revendication 2 caractérisé en ce que l'embout (3221) est une équerre dont l'une des ailes est fixée au bout (3120) libre de la tige (312) et dont l'autre des ailes porte le doigt (3222), et en ce que ce doigt (3222) est orthogonal à la tige (312).

4. Actionneur selon l'une quelconque des revendications 2 et 3 caractérisé en ce que lesdits moyens (3201) comprennent une embase (3210) qui est fixée sur l'élément fixe (11), qui porte un bec (3211), et qui est transpercée à l'aplomb de ce bec (3211) d'une lumière (3212) oblongue parallèle à la tige (312) du vérin et destinée à recevoir ce doigt (3222), un axe (3213) fixé sur l'embase (3210), deux loquets (3214, 3215) en U avec chacun un pont reliant deux branches opposées dont l'une est articulée sur l'axe (3213) et est destinée à venir au contact de la commande (23) du verrou et dont l'autre est destinée à venir au contact de ces doigt (3222) et bec (3211), et un ressort (3216) sollicitant les loquets (3214, 3215) pour tendre à appliquer leurs branches contre ces doigt (3222) et bec (3211).

5. Actionneur selon la revendication 4 caractérisé en ce que la commande (23) du verrou comprend un levier (231) monté sur l'élément fixe (11) à l'aide d'une articulation (232) et sollicité élastiquement (233) et en ce que les loquets (3214, 3215) coopèrent avec ce levier (231) pour le faire basculer à l'encontre de la sollicitation élastique (233).

6. Application d'un actionneur conforme à l'une quelconque des revendications 1 à 5 à une glissière de siège de véhicule.

## Claims

1. Actuator of the type for manoeuvring and displacement of an assembly (10) which is made up principally of a fixed element (11) and a movable element (12) which co-operate and which is equipped with a lock (20) incorporating a catch (22) and with a control means (23) for normally immobilising these fixed (11) and movable (12) elements relative to one another in a position in which they are placed and releasing them at will, the said actuator comprising a jack (31) with a body (311) which is integral with the fixed or movable element and with a rod (312) which has a free and (3120), and a linkage (32) with, on the one hand, means (3201) which are integral with the fixed element (11) and are joined to the control means (23) of the lock and with, on the other hand, a device (3202) which co-operates with these means (3201) and which is borne by the movable element (12) and which is driven by the rod (312) of the said jack, characterised in that the assembly (10) is a travelling slide, and that the lock (20) further includes a notch (21) which is complementary to the catch (22), the control means (23) being integrated in this lock, the body (311) of the jack being integral with the movable element (12), the device (3202) being driven by the free end (3120) of the rod (312), and the linkage (32) being arranged in such a way that when the jack (31) is put into operation the device (3202) acts on the means (3201) in order first of all to manoeuvre the control means (23) of the lock in order to release the elements (11, 12) and then to displace the movable element (12) with respect to the fixed element (11), and vice versa.

2. Actuator as claimed in Claim 1, characterised in that the device (3202) comprises an end piece (3221) which is fixed to the free end (3120) of the rod (312) of the jack (31) and which bears a pawl (3222) intended to co-operate with the means (3201).

3. Actuator as claimed in Claim 2, characterised in that the end piece (3221) is an angle bracket of which one of the arms is fixed to the free end (3120) of the rod (312) and the other arm bears the pawl (3222), and that this pawl (3222) is orthogonal to the rod (312).

4. Actuator as claimed in any one of Claims 2 and 3, characterised in that the said means (3201) comprise a baseplate (3210) which is fixed on the fixed element (11), which bears a nose (3211), and is pierced vertically in line with this nose (3211) by an oblong opening (3212) which is parallel to the rod (312) of the jack and is intended to receive this pawl (3222), a spindle (3213) fixed on the baseplate (3210), two latches (3214, 3215) in a U shape, each having a bridge connecting two opposing branches of which one branch is articulated on the spindle (3213) and is intended to come into contact with the control means (23) of the lock and the other branch is intended to come into contact with the said pawl (3222) and nose (3211), and a spring (3216) acting upon the latches (3214, 3215) to tend to apply the branches thereof against the said pawl (3222) and nose (3211).

5. Actuator as claimed in Claim 4, characterised in that the control (23) of the lock comprises a lever (231) which is mounted on the fixed element (11) with the aid of a joint (232) and acted upon elastically (233), and that the latches (3214, 3215) co-operate with this lever (231) to cause it to tilt against the elastic action (233).

6. Application of an actuator according to any one of Claims 1 to 5 to a slide for a vehicle seat.

## Patentansprüche

1. Betätigungsorgan für die Betätigung und Bewegung einer Einheit (10), die insbesondere aus einem feststehenden Element (11) und einem mit diesem zusammenwirkenden beweglichen Element (12) besteht und die mit einem ein Sperrelement (22) aufweisenden Riegel (20) und einem Antrieb (23) versehen ist, um normalerweise dieses feststehende Element (11) und dieses bewegliche Element (12) in Bezug aufeinander in einer Stellung, in die sie gebracht wurden, zu blockieren und sie auf Wunsch freizugeben, wobei dieses Betätigungsorgan aufweist: eine Kolbenzylindereinheit (31) mit einem Körper (311), der mit dem feststehenden oder dem beweglichen Element fest verbunden ist, und mit einer Stange (312), die einen freien Abschnitt (3120) besitzt, und ein Gestänge (32) mit einerseits Mitteln (3201), die mit dem feststehenden Element (11) fest verbunden sind und die dem Antrieb (23) des Riegels zugeordnet sind, und andererseits mit einer Vorrichtung (3202), die mit diesen Mitteln (3201) zusammenwirkt, von dem beweglichen Element (12) getragen ist und durch die Stange (312) dieser Kolbenzylindereinheit bewegt ist, dadurch gekennzeichnet, daß die Einheit (10) eine Translationsgleitführung ist und daß der Riegel (20) außerdem eine das Sperrelement (22) ergänzende Sperraste (21) besitzt, wobei der Antrieb (23) in diesen Riegel integriert ist, der Körper (311) der Kolbenzylindereinheit mit dem beweglichen Element (12) fest verbunden ist, die Vorrichtung (3202) durch den freien Abschnitt (3120) der Stange (312) bewegt ist und das Gestänge (32) so ausgebildet ist, daß die Vorrichtung (3202) bei der Inbetriebsetzung der Kolbenzylindereinheit (31) auf die Mittel (3201) einwirkt, um zunächst den Antrieb (23) des Riegels zu betätigen, um die Elemente (11, 12) freizugeben, und anschließend das bewegliche Element (12) bezüglich des feststehenden Elements (11) zu bewegen und umgekehrt.

2. Betätigungsorgan nach Anspruch 1, dadurch gekennzeichnet, daß die Vorrichtung (3202) einen Ansatz (3221) besitzt, der an dem freien Abschnitt (3120) der Stange (312) der Kolbenzylindereinheit (31) befestigt ist und der einen Finger (3222) trägt, der dazu bestimmt ist, mit den Mitteln (3201) zusammenzuwirken.

3. Betätigungsorgan nach Anspruch 2, dadurch gekennzeichnet, daß der Ansatz (3221) ein Winkel ist, von dem einer der Schenkel an dem freien Abschnitt (3120) der Stange (312) befestigt ist und der andere der Schenkel den Finger (3222) trägt, und daß dieser Finger (3222) zur Stange (312) rechtwinklig ist.

4. Betätigungsorgan nach einem der Ansprüche 2 und 3, dadurch gekennzeichnet, daß diese Mittel (3201) umfassen: einen Sockel (3210), der auf dem feststehenden Element (11) befestigt ist, eine Nase (3211) trägt und senkrecht unter dieser Nase (3211) ein zur Stange (312) der Kolbenzylindereinheit paralleles Langloch (3212) aufweist, das dazu bestimmt ist, diesen Finger (3222) aufzunehmen, eine an dem Sockel (3210) befestigte Achse (3213), zwei U-förmige Klinken (3214, 3215) mit jeweils einer Brücke, die zwei entgegengesetzte Schenkel verbindet, deren einer an der Achse (3213) angelenkt ist und dazu bestimmt ist, mit dem Antrieb (23) des Riegels in Kontakt zu kommen, und deren anderer dazu bestimmt ist, mit diesem Finger (3222) und mit dieser Nase (3211) in Kontakt zu kommen, und eine Feder (3216), die diese Klinken (3214, 3215) beaufschlagt, um ihre Schenkel an diesen Finger (3222) und diese Nase (3211) anzudrücken.

5. Betätigungsorgan nach Anspruch 4, dadurch gekennzeichnet, daß der Antrieb (23) des Riegels einen Hebel (231) umfaßt, der auf dem feststehenden Element (11) mit Hilfe eines Gelenks (232) montiert ist und elastisch beaufschlagt ist (233), und daß diese Klinken (3214, 3215) mit diesem Hebel (231) zusammenwirken, um ihn entgegen der elastischen Beaufschlagung (233) zu verschwenken.

6. Anwendung eines Betätigungsorgans nach einem der Ansprüche 1 bis 5 auf eine Gleitschiene eines Fahrzeugsitzes.
